# EUROPEAN PATENT SPECIFICATION

(11) **EP 2 816 208 B1**
(45) Date of publication and mention of the grant of the patent: **21.11.2018**
(21) Application number: 12868493.3
(22) Date of filing: 14.02.2012
(51) Int. Cl.: F02B 39/16

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 24.12.2014
(73) Proprietor: TOYOTA JIDOSHA KABUSHIKI KAISHA, Toyota-shi, Aichi-ken, 471-8571 (JP)
(72) Inventor: KOBAYASHI, Junya, Toyota-shi, Aichi-ken, 471-8571 (JP)
(74) Representative: D Young & Co LLP
(86) International application number: PCT/JP2012/053360
(87) International publication number: WO 2013/121517

(56) References cited:
- EP-A1- 2 211 044
- JP-A- H1 019 788
- JP-A- 2006 299 827
- JP-A- 2006 299 827
- JP-A- 2007 211 595
- JP-A- 2007 211 595
- JP-A- 2010 096 029
- JP-A- 2011 089 470
- JP-U- S61 162 541

## Description

### TECHNICAL FIELD

The present disclosure relates to a control apparatus for an internal combustion engine represented by an automobile engine or a similar engine. In particular, the present disclosure relates to improvement for highly maintaining performance of the internal combustion engine with supercharger.

### BACKGROUND ART

Conventionally, a supercharger (hereinafter also referred to as a "turbocharger") mounted to an automobile engine supercharges intake air to an inside of a cylinder by rotation of a compressor wheel disposed at an intake passage. This supercharge (compression) increases a temperature of the intake air. Accordingly, a temperature of the compressor wheel or a similar component is also increased.

In a condition where oil (such as engine oil) flows in a compressor of the turbocharger, a deposit is caused by exposure of this oil under high temperature. This arises a condition that the deposit attaches to a blade of the compressor wheel and an inner surface of a turbo housing (compressor passage inner wall surface).

For example, the following Patent Literature 1 discloses an engine with a Low Pressure Loop (LPL)-EGR mechanism. The LPL-EGR mechanism refluxes exhaust gas (EGR gas) from an exhaust passage at a downstream with respect to a turbine of a turbocharger to an intake passage at an upstream with respect to a compressor of the turbocharger. With this engine, attaching the above-described deposit is apprehended. That is, with the engine including this LPL-EGR mechanism, the EGR gas refluxed to the intake passage, which is at the upstream with respect to the compressor, possibly contains oil. Additionally, a temperature of intake air (mixture gas of new air and EGR gas at high temperature) flown into the compressor is comparatively high. Since supercharging this intake air exposes the oil under a high temperature, attaching the above-described deposit is apprehended.

Patent Literature 2 proposes the following technique to reduce the deposit in the compressor. Patent Literature 2 discloses the following. To reduce the deposit in a compressor caused by blow-by gas returned to an intake passage, an inside of a crankcase is controlled so as to be atmospheric air pressure. Thus, a flow rate of the blow-by gas is reduced as much as possible.
JP 2006 299827 A discloses a control device of turbocharger.

### CITATION LIST

### PATENT LITERATURE

PATENT LITERATURE 1: Japanese Unexamined Patent Application Publication No. 2011-89470
PATENT LITERATURE 2: Japanese Unexamined Patent Application Publication No. 2010-96029

### SUMMARY OF INVENTION

### TECHNICAL PROBLEM

As described above, if a deposit attaches to a compressor wheel and a periphery of the compressor wheel, supercharging efficiency of a turbocharger is degraded, possibly reducing an engine output. In accordance with this, there is a possibility to increase an amount of NOx in exhaust gas. This is because of the following reason. Generally, feedback control is performed on an engine to maintain an air-fuel ratio of exhaust gas to a target air-fuel ratio. Accordingly, if the supercharging pressure is reduced at the same air-fuel ratio, an amount of EGR gas is reduced. To reduce the deposit, preliminarily setting low supercharging pressure is also considered. However, if the supercharging pressure is set low more than necessary, sufficient engine output cannot be obtained, thus causing degrading acceleration performance of a vehicle.

Up to the present, effective means to maximally enhance the supercharging pressure while reducing the deposit has not been proposed.

Compared with the case of using mineral oil as engine oil, the use of synthetic oil is less likely to generate the deposit, specifying the synthetic oil as the used engine oil is also considered. However, the use of the synthetic oil rises a maintenance cost. Further, apprehension of generation of the deposit caused by mistakenly using the mineral oil cannot be dispelled. A request of maximally enhancing the supercharging pressure while reducing the deposit is present regardless of oil type. That is, supposing that the synthetic oil is used, allowing maximally enhancing the supercharging pressure while reducing the deposit is preferred. However, the effective means to response the request has not been proposed yet.

The technique of Patent Literature 2 reduces the flow rate of the blow-by gas to reduce the deposit. However, this may degrade process performance of the blow-by gas generated in the crankcase. If the technique of Patent Literature 2 is applied to the LPL-EGR mechanism, an amount of refluxed EGR gas is reduced. This damages the functions of an EGR system itself, possibly causing an increase of an amount of NOx.

The present disclosure has been made in view of these points, it is an object of the present disclosure to provide a control apparatus for internal combustion engine that allows maximally enhancing the supercharging pressure while reducing the deposit for an internal combustion engine with a supercharger.

### SOLUTIONS TO THE PROBLEMS

### -Principle of Solution of Present Invention-

A principle of a solution of the present disclosure devised in order to achieve the aforementioned object is as follows. An allowable upper limit temperature of an outlet side of a compressor or an allowable upper limit temperature of a compressor itself a which a deposit does not occur is obtained from a degree of deterioration of oil. Based on this allowable upper limit temperature, an allowable upper limit supercharging pressure value of a supercharger is set to control the supercharger. With the present disclosure includes an EGR system, in the case where an EGR rate is changed by controlling the supercharging pressure to be equal to or less than the allowable upper limit supercharging pressure value, the EGR system is also controlled so as to properly maintain this EGR rate.

### -Solution Means-

Specifically, it is assumed that the present disclosure is a control apparatus for an internal combustion engine with a compressor for a supercharger at an intake system. In this control apparatus for the internal combustion engine, supercharging pressure of the supercharger is controlled within a control range where an intake temperature of an outlet side of the compressor or a temperature of a component constituting the compressor is equal to or less than an allowable upper limit temperature. The allowable upper limit temperature is set according to a degree of deterioration of oil flown into an intake side of the compressor. An EGR system with an EGR valve is provided. The EGR system causes a part of exhaust gas discharged to an exhaust system to be refluxed to an upstream of the compressor. The EGR valve is able to adjust an amount of the refluxed gas. The control apparatus controls the EGR valve such that an EGR rate of intake air in the case where the supercharging pressure by the supercharger is controlled within the control range where the intake temperature of the outlet side of the compressor or the temperature of the component constituting the compressor is equal to or less than the allowable upper limit temperature matches a target EGR rate. The target EGR rate is set according to an operating state of the internal combustion engine.

When the oil is flown into the intake side of the compressor, the higher the degree of deterioration of the oil, the lower a temperature environment at which deposit occurs. In view of this, the temperature at which this deposit is reduced (intake temperature of the outlet side of the compressor or the temperature of the component constituting the compressor) can be decided based on the degree of deterioration of oil. The temperature of intake air in accordance with the supercharge by the supercharger becomes high as the supercharging pressure increases. That is, the temperature of the supercharged intake air (temperature of the outlet side of the compressor) and the temperature of the compressor itself correlate to the supercharging pressure by the supercharger. Accordingly, when the supercharging pressure by the supercharger is properly adjusted and the temperature in accordance with the supercharge (intake temperature of the outlet side of the compressor or the temperature of the component constituting the compressor) is reduced to equal to or less than the allowable upper limit temperature corresponding to the degree of deterioration of current oil, the deposit can be avoided. Insofar as the temperature is equal to or less than the range of this allowable upper limit temperature, the supercharging pressure by the the supercharger can be freely set. Therefore, as above-described solution means, by controlling the supercharging pressure by the supercharger within the control range of equal to or less than the allowable upper limit temperature, the supercharging pressure of intake air by the supercharger can be maximally enhanced while reducing the deposit. Reducing the deterioration of supercharging efficiency of the supercharger to the minimum allows reducing the deterioration of an output from an internal combustion engine. The increase of amount of NOx in the exhaust gas or a similar situation in accordance with the deterioration of the supercharging efficiency of the supercharger can be avoided.

Further, the internal combustion engine with the EGR system features the following. An EGR system with an EGR valve is provided. The EGR system causes a part of exhaust gas discharged to an exhaust system to be refluxed to an upstream of the compressor. The EGR valve is able to adjust an amount of the refluxed gas. The control apparatus controls the EGR valve such that an EGR rate of intake air in a case where the supercharging pressure by the supercharger is controlled within the control range where the intake temperature of the outlet side of the compressor or the temperature of the component constituting the compressor is equal to or less than the allowable upper limit temperature matches a target EGR rate. The target EGR rate is set according to an operating state of the internal combustion engine.

In this case, even if the supercharging pressure is limited so as to reduce the deposit, the EGR valve is controlled so as to maintain the target EGR rate. Accordingly, the amount of NOx emission due to reduction of the EGR rate is not increased.

The following specifically describes a constitution for determining the degree of deterioration of oil. That is, a higher a concentration of soot generated in the oil, the higher a degree of deterioration of oil flown into the intake side of the compressor is determined to be. The higher the degree of deterioration of oil, the lower the allowable upper limit temperature of the intake temperature of the outlet side of the compressor or the temperature of the component constituting the compressor is set.

This allows the supercharging pressure control of the supercharger based on the degree of deterioration of oil, which is a cause of deposit, allowing reliably preventing the deposit.

### ADVANTAGEOUS EFFECTS OF INVENTION

The present disclosure controls supercharging pressure of a supercharger within a control range of equal to or less than an allowable upper limit temperature set according to a degree of deterioration of oil flown into an intake side of a compressor. This allows maximally enhancing supercharging pressure of intake air by the supercharger while reducing a deposit. Particular aspects of the invention are set out in the appended claims.

### BRIEF DESCRIPTION OF THE DRAWINGS

[Fig. 1] FIG. 1 is a schematic configuration diagram illustrating an engine according to an embodiment.
[Fig. 2] FIG. 2 is a block diagram illustrating a configuration of a control system such as an ECU.
[Fig. 3] FIG. 3 illustrates a map for setting a mode for an MPL-EGR system during warming the engine.
[Fig. 4] FIG. 4 is illustrates a map for setting the mode for the MPL-EGR system during cooling the engine.
[Fig. 5] FIG. 5 is a flowchart illustrating a schematic procedure of a supercharging pressure control and an EGR valve control.
[Fig. 6] FIG. 6 is a flowchart illustrating a procedure of an extraction operation of an allowable upper limit value of compressor outlet temperature.
[Fig. 7] FIG. 7 illustrates an allowable upper limit temperature map for obtaining the allowable upper limit value of compressor outlet temperature from soot concentration in oil.
[Fig. 8] FIG. 8 is a flowchart illustrating a procedure of the supercharging pressure control by a turbo charger.
[Fig. 9] FIG. 9 is a flowchart illustrating a procedure of an EGR valve control.

### DESCRIPTION OF EMBODIMENTS

Embodiments of the present invention are described below with reference to the drawings. In these embodiments, a case will be described in which the present invention is applied to a common rail in-cylinder direct injection multi-cylinder (for example, inline four-cylinder) diesel engine (compression self-ignition internal combustion engine) mounted in an automobile. The following also describes a case where the present invention is applied to a diesel engine that mounts an MPL-EGR system with a high pressure EGR mechanism and a low pressure EGR mechanism as an EGR system.

### -Constitution of Engine-

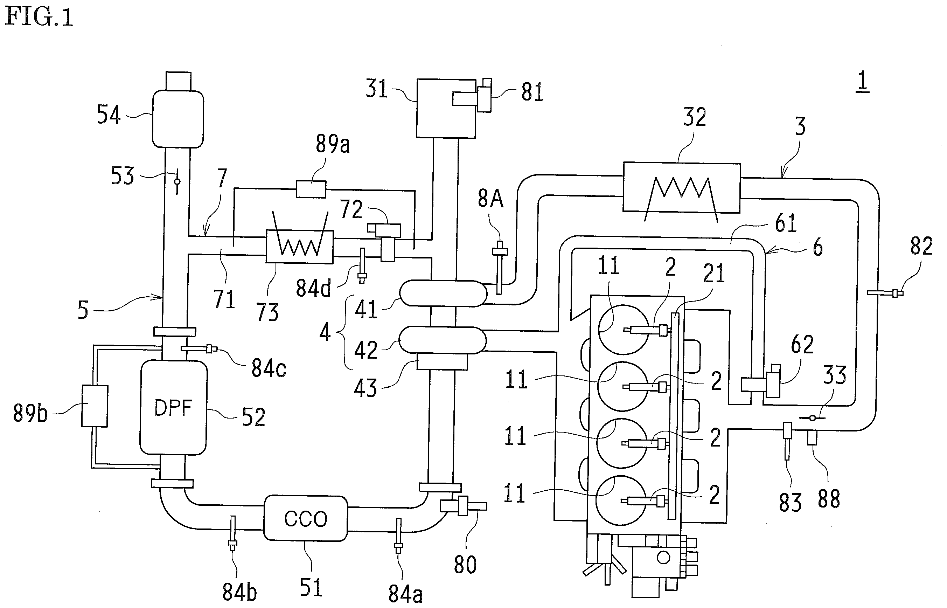

FIG. 1 is a schematic configuration of an engine (internal combustion engine) 1 according to an embodiment. The engine 1 illustrated in FIG. 1 is a diesel engine that includes four cylinders 11, 11, .... The cylinders 11 include respective injectors (fuel injection valves) 2 that can directly inject fuel to the inside of the cylinders 11. These injectors 2, for example, each include piezoelectric elements (piezo elements) internally and are constituted with piezo injectors. The piezo injector appropriately opens a valve and supplies the inside of the cylinder 11 with fuel by injection. Fuel stepped up by a high-pressure fuel pump P is supplied to the injectors 2 via a common rail 21.

An intake passage 3 that constitutes an intake system is coupled to the respective cylinders 11. An air cleaner 31 is disposed at an upstream end of the intake passage 3. In the middle of the intake passage 3, a compressor 41 of a turbocharger (centrifugal supercharger) 4, an intercooler 32, and an intake throttle valve (diesel throttle) 33 are disposed in this order along a direction of a flow of intake air. The air cleaner 31 purifies intake air introduced to the intake passage 3. Then, the compressor 41 supercharges the intake air and the intercooler 32 cools the intake air. Afterwards, the intake air passes through the intake throttle valve 33 and is introduced in the respective cylinders 11. The intake air introduced in the respective cylinders 11 is compressed at a compression stroke. Injection of fuel from the injector 2 in the respective cylinders 11 burns the fuel. In association with this burning of fuel, pistons (not illustrated) perform reciprocation in the cylinders of the respective cylinders 11. Rotating a crankshaft via a connecting rod obtains an engine output.

The intake throttle valve 33 is fully throttled during normal operation. For example, during deceleration of a vehicle or a similar state, the intake throttle valve 33 is closed to a predetermined degree of opening as necessary (for example, in the case where a temperature fall of an oxidation catalyst 51, which will be described below, needs to be prevented).

An exhaust passage 5 constituting an exhaust system is coupled to the respective cylinders 11. A turbine 42 of the turbocharger 4 is disposed in the middle of the exhaust passage 5.

The turbocharger 4 according to the embodiment is a variable nozzle turbocharger. A variable nozzle vane mechanism 43 is disposed at the turbine 42 side. Adjusting the degree of opening of the nozzle vane provided to this variable nozzle vane mechanism 43 allows adjusting supercharging pressure of the engine 1. Specifically, decreasing the degree of opening of nozzle vane increases supercharging pressure at the compressor 41. On the contrary, increasing the degree of opening of nozzle vane reduces the supercharging pressure at the compressor 41. Since the constitution of the variable nozzle vane mechanism 43 is well-known (for example, see Japanese Unexamined Patent Application Publication No. 2011-127561 and Japanese Unexamined Patent Application Publication No. 2012-7544), the explanation will not be further elaborated here.

At the exhaust passage 5 downstream with respect to the turbine 42, a Catalytic Converter Oxidation (CCO) 51, a Diesel Particulate Filter (DPF) 52, an exhaust throttle valve 53, and a muffler 54 are disposed in this order along a direction of flow of exhaust air.

Exhaust gas (burnt gas) generated by burning at the inside of the respective cylinders 11 is discharged to the exhaust passage 5. The exhaust gas discharged to this exhaust passage 5 passes through the turbine 42, which is disposed in the middle of the exhaust passage 5. Then, the oxidation catalyst 51 and the particulate filter 52 purify the exhaust gas. The exhaust gas passes through the exhaust throttle valve 53 and the muffler 54 and is discharged to the atmosphere.

### -EGR system-

The engine 1 according to the embodiment includes an MPL-EGR system that includes an HPL-EGR mechanism (high pressure EGR mechanism) 6 and an LPL-EGR mechanism (low pressure EGR mechanism) 7.

The HPL-EGR mechanism 6 includes a high pressure EGR passage 61 and a high pressure EGR valve 62. The high pressure EGR passage 61 guides a part of exhaust gas (high pressure EGR gas) from the exhaust passage 5 (for example, an exhaust manifold) upstream with respect to the turbine 42 of the turbocharger 4 to the intake passage 3 downstream with respect to the compressor 41 (downstream with respect to the intake throttle valve 33). The high pressure EGR valve 62 allows changing a flow passage area of the high pressure EGR passage 61.

An amount of refluxed high pressure EGR gas (recirculated) by the HPL-EGR mechanism 6 is metered by the degree of opening of the high pressure EGR valve 62. As necessary, the degree of opening of the intake throttle valve 33 is set small (a degree of closing is set large). This may increase an amount of refluxed high pressure EGR gas.

On the other hand, the LPL-EGR mechanism 7 includes a low pressure EGR passage 71, a low pressure EGR valve 72, and a low pressure EGR cooler 73. The low pressure EGR passage 71 guides a part of exhaust gas (low pressure EGR gas) from the exhaust passage 5 downstream with respect to the turbine 42 (downstream with respect to the particulate filter 52) and upstream with respect to the exhaust throttle valve 53 to the intake passage 3 upstream with respect to the compressor 41. The low pressure EGR valve 72 can change the flow passage area of the low pressure EGR passage 71. The low pressure EGR cooler 73 cools the low pressure EGR gas flowing the low pressure EGR passage 71.

An amount of refluxed low pressure EGR gas (recirculated) by the LPL-EGR mechanism 7 is metered by the degree of opening of the low pressure EGR valve 72. As necessary, the degree of opening of the exhaust throttle valve 53 is set small. This may increase an amount of refluxed low pressure EGR gas.

### -Control System-

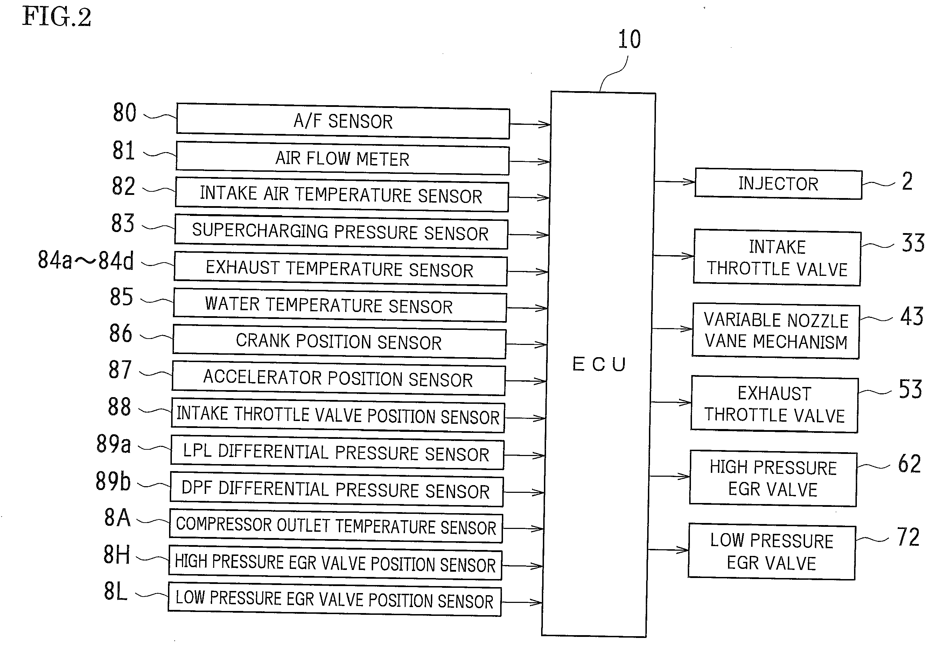

As illustrated in FIG. 2, the above-described injector 2, intake throttle valve 33, variable nozzle vane mechanism 43, exhaust throttle valve 53, high pressure EGR valve 62, and low pressure EGR valve 72 are electrically coupled to an Electronic Control Unit (ECU) 10.

The ECU 10 is electrically coupled to various sensors. The various sensors includes an A/F sensor 80, an air flow meter 81, an intake air temperature sensor 82, a supercharging pressure sensor 83, a plurality of exhaust temperature sensors 84a to 84d, a water temperature sensor 85, a crank position sensor 86, an accelerator position sensor 87, an intake throttle valve position sensor 88, an LPL differential pressure sensor 89a, a DPF differential pressure sensor 89b, a compressor outlet temperature sensor 8A, a high pressure EGR valve position sensor 8H, a low pressure EGR valve position sensor 8L, or a similar component.

The A/F sensor 80 is a sensor that detects an oxygen concentration in exhaust air at the upstream of the oxidation catalyst 51 and the downstream of the turbine 42. The A/F sensor 80 outputs a detection signal that continuously changes according to the oxygen concentration. The air flow meter 81 is a sensor that measures an amount of air (amount of fresh air) flown from the atmosphere to the intake passage 3. The intake air temperature sensor 82 is a sensor that detects a temperature of air flown in the intake passage 3 (specifically, a temperature at the downstream of the intercooler 32 and the upstream of the intake throttle valve 33). The supercharging pressure sensor 83 is a sensor that detects pressure at the downstream of the intake throttle valve 33 (pressure of the intake air supercharged by the turbocharger 4). The exhaust temperature sensors 84a to 84d are installed at the upstream of the oxidation catalyst 51, the downstream of the oxidation catalyst 51, the downstream of the particulate filter 52, and the downstream of the low pressure EGR cooler 73 at the low pressure EGR passage 71 (at the upstream of the low pressure EGR valve 72), respectively to detect temperatures of exhaust gas at the respective locations. The water temperature sensor 85 is a sensor that detects a temperature of cooling water circulating the inside of the engine 1. The crank position sensor 86 is a sensor that detects a rotation position of a crankshaft of the engine 1. The accelerator position sensor 87 is a sensor that detects an operation amount (accelerator position) of the accelerator pedal by a driver. The intake throttle valve position sensor 88 is a sensor that detects the degree of opening of the intake throttle valve 33. The LPL differential pressure sensor 89a is a sensor that measures differential pressure between pressure at the upstream and pressure at the downstream of the low pressure EGR cooler 73 of the LPL-EGR mechanism 7. The DPF differential pressure sensor 89b is a sensor that measures differential pressure between pressure at the upstream and pressure at the downstream of the particulate filter 52. The DPF differential pressure sensor 89b is used for estimating an amount of accumulation of Particulate Matter (PM: particulate) at the insider of the particulate filter 52. The compressor outlet temperature sensor 8A is a sensor that detects a temperature of intake air (mixture gas of supercharged new air and low pressure EGR gas) flowing out from the compressor 41. The high pressure EGR valve position sensor 8H is a sensor that detects the degree of opening of the high pressure EGR valve 62. The low pressure EGR valve position sensor 8L is a sensor that detects the degree of opening of the low pressure EGR valve 72.

The ECU 10 controls the injector 2, the intake throttle valve 33, the variable nozzle vane mechanism 43, the exhaust throttle valve 53, the high pressure EGR valve 62, and the low pressure EGR valve 72 based on detected values and measured values of the above-described various sensors 80 to 89a, 89b, 8A, 8H, and 8L.

For example, the ECU 10 controls the HPL-EGR mechanism 6 and the LPL-EGR mechanism 7 according to the operating state of the engine 1 (for example, an engine load).

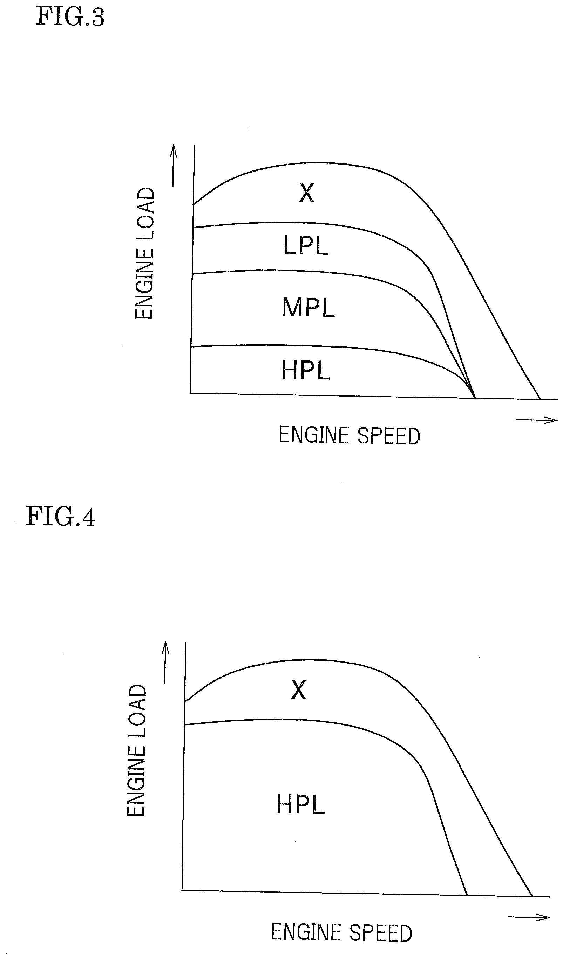

Specifically, during warming the engine 1 (for example, a cooling water temperature is equal to or more than 60°C), in accordance with the map of FIG. 3, the used EGR mechanisms 6 and 7 are selected. That is, when the engine 1 is in a low load operating state, the ECU 10 refluxes exhaust gas using the HPL-EGR mechanism 6 (reflux operation at a high pressure EGR region). When the engine 1 is in a high load operating state, the ECU 10 refluxes exhaust gas using the LPL-EGR mechanism 7 (reflux operation at a low pressure MPL region). When the engine 1 is in a middle load operating state, the ECU 10 refluxes exhaust gas using both the HPL-EGR mechanism 6 and the LPL-EGR mechanism 7 (reflux operation at an MPL region). These specific controls will be described later. A region X in FIG. 3 is an operation region at which both the high pressure EGR valve 62 of the HPL-EGR mechanism 6 and the low pressure EGR valve 72 of the LPL-EGR mechanism 7 are closed, that is, an operation region at which EGR gas is not refluxed. This is an operation region for the case where an amount of smoke in the exhaust gas is increased and system reliability such as a restriction on EGR gas temperature is requested.

Thus, according to the operating state of the engine 1, usage states of the HPL-EGR mechanism 6 and the LPL-EGR mechanism 7 are shifted. Alternatively, when the respective EGR mechanisms 6 and 7 are used in combination, refluxing an appropriate amount of EGR gas in the wide-range operation region of the engine 1 is possible, allowing preferably reducing NOx concentration in the exhaust air.

On the other hand, during cooling of the engine 1, as illustrated in the map of FIG. 4, the ECU 10 refluxes the exhaust gas using the HPL-EGR mechanism 6 at the operation region other than the region X regardless of the load of the engine 1. This is due to the following reason. Refluxing the exhaust gas at a comparatively high temperature using the HPL-EGR mechanism 6, which does not include the EGR cooler, achieves quick warming-up of the engine 1 and quick activation of the oxidation catalyst 51.

### -Basic Control of MPL-EGR System-

### Next, the following describes a basic control of the MPL-EGR system.

First, the following describes a control of an amount of EGR gas in the HPL-EGR mechanism 6 and the control of the amount of EGR gas in the LPL-EGR mechanism 7. The control of the amount of EGR gas in the HPL-EGR mechanism 6 and the control of the amount of EGR gas in the LPL-EGR mechanism 7 are controls independent from one another.

In the case where the EGR gas is refluxed using the HPL-EGR mechanism 6 (including the case where the LPL-EGR mechanism 7 is used in combination), a target amount of refluxed EGR gas (hereinafter referred to as a "target high pressure EGR gas reflux amount") is compared with an estimated amount of refluxed EGR gas (hereinafter referred to as an "estimated high pressure EGR gas reflux amount"). To approximate this estimated high pressure EGR gas reflux amount to the target high pressure EGR gas reflux amount, the degree of opening of the high pressure EGR valve 62 and the degree of opening of the intake throttle valve 33 are feedback controlled (hereinafter referred to as an "EGR feedback control"). The target high pressure EGR gas reflux amount in this case is set corresponding to the operating state of the engine 1 (in particular, the engine load). The estimated high pressure EGR gas reflux amount is obtained by a predetermined arithmetic expression or a map preliminarily stored in a Read Only Memory (ROM) of the ECU 10. The arithmetic expression or the map configures the degree of opening of the high pressure EGR valve 62, which is detected by the high pressure EGR valve position sensor 8H, the temperature of intake air detected by the intake air temperature sensor 82, and differential pressure between the intake air pressure detected by the supercharging pressure sensor 83 and pressure in an exhaust manifold as parameters. The pressure inside of the exhaust manifold is obtained by the predetermined arithmetic expression or map preliminarily stored in the ROM of the ECU 10. The arithmetic expression or the map configures the intake air pressure, the amount of operating state of the engine 1, or a similar state as parameters.

On the other hand, in the case where the EGR gas is refluxed using the LPL-EGR mechanism 7 (including the case where the HPL-EGR mechanism 6 is used in combination), a target amount of refluxed EGR gas (hereinafter referred to as a "target low pressure EGR gas reflux amount") is compared with an estimated amount of refluxed EGR gas (hereinafter referred to as an "estimated low pressure EGR gas reflux amount"). To approximate this estimated low pressure EGR gas reflux amount to the target low pressure EGR gas reflux amount, the degree of opening of the low pressure EGR valve 72 and the degree of opening of the exhaust throttle valve 53 are feedback controlled (EGR feedback control). The target low pressure EGR gas reflux amount in this case is set corresponding to the operating state of the engine 1 (in particular, the engine load). The estimated low pressure EGR gas reflux amount is obtained by the predetermined arithmetic expression or the map preliminarily stored in the ROM of the ECU 10. The arithmetic expression or the map configures the degree of opening of the low pressure EGR valve 72, which is detected by the low pressure EGR valve position sensor 8L, the temperature of exhaust air detected by the exhaust temperature sensors 84a to 84d, and differential pressure between the pressure at the upstream and the pressure at the downstream of the low pressure EGR cooler 73 detected by the LPL differential pressure sensor 89a as parameters.

The following describes a basic operation of the MPL-EGR system (basic operations of the HPL-EGR mechanism 6 and the LPL-EGR mechanism 7) according to the load of the engine 1.

### (During Low Load Operation)

As described above, when the engine load is comparatively low (low load region), the EGR gas is refluxed using only the HPL-EGR mechanism 6. This operation region is referred to as an HPL region. When the cooling water temperature is low, the EGR gas is refluxed using only the HPL-EGR mechanism 6 as well.

The EGR feedback control at this HPL region is performed as follows. The target high pressure EGR gas reflux amount is configured to match the amount of intake air detected by the air flow meter 81 to the target amount of intake air set according to the engine load, an engine rotation speed (engine speed), or a similar condition. As described above, the feedback control is performed on the degree of opening of the high pressure EGR valve 62 so that the estimated high pressure EGR gas reflux amount matches the target high pressure EGR gas reflux amount. At this time, the low pressure EGR valve 72 is held to be all closed.

For example, assume the case where the amount of intake air obtained by the air flow meter 81 is less than the target value and an actual EGR rate is higher than a target EGR rate (EGR rate decided according to the operating state of the engine 1 or a similar state). Since the estimated high pressure EGR gas reflux amount is more than the target high pressure EGR gas reflux amount, the degree of opening of the high pressure EGR valve 62 is reduced so as to reduce the amount of EGR gas.

Assume the case where the amount of intake air obtained by the air flow meter 81 is more than the target value and the actual EGR rate is lower than the target EGR rate. Since the estimated high pressure EGR gas reflux amount is less than the target high pressure EGR gas reflux amount, the degree of opening of the high pressure EGR valve 62 is increased so as to increase the amount of EGR gas. Additionally, assume the case where the estimated high pressure EGR gas reflux amount does not reach the target high pressure EGR gas reflux amount even if the degree of opening of the high pressure EGR valve 62 is thus increased. Then, the degree of opening of the intake throttle valve 33 is reduced (the degree of closing is increased). Reducing pressure at the downstream of the intake throttle valve 33 increases the amount of EGR gas refluxed through the high pressure EGR passage 61. Thus, the actual EGR rate is approximated to the target EGR rate.

Hereinafter, a control mode that refluxes the EGR gas using only the HPL-EGR mechanism 6 is referred to as an HPL mode. Originally, ranges may be provided to the target value of amount of intake air and the target value of the amount of EGR gas to some extent, configuring target ranges. In the case where the amount of EGR gas can be directly measured with a sensor or a similar device, the degree of opening of the high pressure EGR valve 62 may be adjusted so that the amount of EGR gas becomes the target value or is in the target range.

### (During High Load Operation)

As described above, when the engine load is comparatively high (high load region), the EGR gas is refluxed using only the LPL-EGR mechanism 7. This operation region is referred to as the LPL region.

The EGR feedback control at this LPL region is performed as follows. The target low pressure EGR gas reflux amount is configured to match the amount of intake air detected by the air flow meter 81 to the target amount of intake air set according to the engine load, the engine rotation speed, or a similar condition. As described above, the feedback control is performed on the degree of opening of the low pressure EGR valve 72 so that the estimated low pressure EGR gas reflux amount matches the target low pressure EGR gas reflux amount. At this time, basically (unless the amount of EGR gas is not insufficient), the high pressure EGR valve 62 is held to be all closed.

For example, assume the case where the amount of intake air obtained by the air flow meter 81 is less than the target value and the actual EGR rate is higher than the target EGR rate. Since the estimated low pressure EGR gas reflux amount is more than the target low pressure EGR gas reflux amount, the degree of opening of the low pressure EGR valve 72 is reduced so as to reduce the amount of EGR gas.

Assume the case where the amount of intake air obtained by the air flow meter 81 is more than the target value and the actual EGR rate is lower than the target EGR rate. Since the estimated low pressure EGR gas reflux amount is less than the target low pressure EGR gas reflux amount, the degree of opening of the low pressure EGR valve 72 is increased so as to increase the amount of EGR gas. Additionally, assume the case where the estimated low pressure EGR gas reflux amount does not reach the target low pressure EGR gas reflux amount even if the degree of opening of the low pressure EGR valve 72 is thus increased. Then, the degree of opening of the high pressure EGR valve 62 is increased. Alternatively, the degree of opening of the exhaust throttle valve 53 is reduced (the degree of closing is increased), thus increasing the amount of EGR gas refluxed through the low pressure EGR passage 71. Thus, the actual EGR rate is approximated to the target EGR rate.

Hereinafter, a control mode that refluxes the EGR gas using only the LPL-EGR mechanism 7 is referred to as an LPL mode. Originally, ranges may be provided to the target value of amount of intake air and the target value of the amount of EGR gas to some extent, configuring target ranges. In the case where the amount of EGR gas can be directly measured with a sensor or a similar device, the degree of opening of the low pressure EGR valve 72 may be adjusted so that the amount of EGR gas becomes the target value or is in the target range.

### (During Middle Load Operation)

As described above, while the engine is in the middle load operation (middle load region), the EGR gas is refluxed using both the HPL-EGR mechanism 6 and the LPL-EGR mechanism 7. A region between this HPL region and the LPL region is referred to as an MPL region.

The EGR feedback control at this MPL region decides the target amount of intake air and the target EGR rate (= amount of refluxed high pressure EGR gas + amount of refluxed low pressure EGR gas/amount of refluxed high pressure EGR gas + amount of refluxed low pressure EGR gas + amount of intake air) according to the engine load, the engine rotation speed, or a similar condition. From these values, the total amount of EGR gas is set. According to the engine load or a similar condition, an EGR distribution ratio (a ratio of an amount of high pressure EGR gas refluxed by the HPL-EGR mechanism 6 to an amount of the low pressure EGR gas refluxed by the LPL-EGR mechanism 7) is decided. The distribution ratio of high pressure EGR gas (amount of refluxed high pressure EGR gas/amount of refluxed high pressure EGR gas + amount of refluxed low pressure EGR gas) and the distribution ratio of low pressure EGR gas (= amount of refluxed low pressure EGR gas/amount of refluxed high pressure EGR gas + amount of refluxed low pressure EGR gas) are each multiplied by the total amount of EGR gas. Thus, a targeted amount of high pressure EGR gas (target high pressure EGR gas reflux amount) and a targeted amount of low pressure EGR gas (target low pressure EGR gas reflux amount) are obtained.

The HPL-EGR mechanism 6 controls the degree of opening of the high pressure EGR valve 62 so that the estimated high pressure EGR gas reflux amount reaches the target high pressure EGR gas reflux amount. The position control on the high pressure EGR valve 62 is similar to the position control for the above-described low load operation.

On the other hand, the LPL-EGR mechanism 7 controls the degree of opening of the low pressure EGR valve 72 so that the estimated low pressure EGR gas reflux amount reaches the target low pressure EGR gas reflux amount. The position control on the low pressure EGR valve 72 is similar to the position control for the above-described high load operation.

Hereinafter, a control mode that supplies the EGR gas using both the HPL-EGR mechanism 6 and the LPL-EGR mechanism 7 is referred to as an MPL mode. Originally, ranges may be provided to the target value of amount of intake air and the target value of the amount of EGR gas to some extent, configuring target ranges. In the case where the amount of EGR gas can be directly measured with a sensor or a similar device, the degree of opening of one of the low pressure EGR valve 72 and the high pressure EGR valve 62 may be adjusted so that the amount of EGR gas becomes the target value or is in the target range.

### -Supercharging Pressure Control and EGR Valve Control-

Next, the following describes the supercharging pressure control and the EGR valve control, which are characteristic controls of this embodiment.

With the engine 1 including the above-described EGR system and turbocharger 4, EGR gas flowing the low pressure EGR passage 71 of the LPL-EGR mechanism 7, that is, the EGR gas refluxed to the upstream of the compressor 41 may contain engine oil. The temperature of intake air flown into the compressor 41 (mixture gas of new air and EGR gas at high temperature) becomes comparatively high. In view of this, if the EGR gas is supercharged together with the intake air to the compressor 41, the deposit is caused by exposure of the oil contained in the EGR gas under high temperature. This arises a condition that the deposit attaches to a blade of a compressor wheel and an inner surface of a turbo housing (compressor passage inner wall surface).

In such condition, supercharging efficiency of the turbocharger 4 is degraded. This degrades an engine output, resulting in reduction of acceleration performance of vehicle. Reduction of the amount of EGR gas due to the reduction of supercharging efficiency of the turbocharger 4 or a similar cause may increase an amount of NOx in the exhaust gas.

This embodiment considers this point. This embodiment allows maximally enhancing the supercharging pressure while reducing the deposit. Moreover, the supercharging pressure control and the EGR valve control are performed so as not to increase the amount of NOx emission.

First, the following describes outlines of the supercharging pressure control and the EGR valve control. The more deterioration of engine oil proceeds (the higher a degree of deterioration), the more the deposit is likely to occur even at low temperature environment. In view of this, the more the deterioration of engine oil proceeds, the lower a temperature at which a deposit occurs (a temperature of intake air and a temperature of the compressor wheel in association with supercharge). The higher the supercharging pressure by the turbocharger 4, the higher the temperature of intake air in association with the supercharging. That is, the temperature of supercharged intake air correlates to supercharging pressure by the turbocharger 4. From these points, the deposit can be avoided by properly adjusting the supercharging pressure by the turbocharger 4 and reducing the temperature of intake air in association with the supercharge (temperature correlated to the temperature of compressor wheel) to less than a temperature at which the deposit corresponding to a degree of deterioration of current engine oil occurs. As long as the temperature of intake air is in a range of less than the temperature at which the deposit occurs, freely setting the supercharging pressure by the turbocharger 4 is possible. As described above, the position control of the variable nozzle vane provided to the variable nozzle vane mechanism 43 can adjust the supercharging pressure by the turbocharger 4.

The supercharging pressure control in the embodiment first recognizes a degree of deterioration of oil from a Soot concentration in the oil. Next, from the degree of deterioration of this oil, the allowable upper limit value of the intake temperature (actually the outlet temperature of the compressor 41) is obtained. Based on the allowable upper limit value, the allowable supercharging pressure of the turbocharger 4 is calculated. Then, within the range of the allowable supercharging pressure, the supercharging pressure of the turbocharger 4 is set. In view of this, even if the supercharging pressure of the turbocharger 4 is increased up to the maximum pressure within the range of the allowable supercharging pressure, the deposit is not generated.

On the other hand, if the supercharging pressure of the turbocharger 4 is changed, for example, the supercharging pressure is limited by the allowable supercharging pressure, the EGR rate is changed according to variation of the amount of intake air. Accordingly, to prevent the change in the EGR rate, that is, to obtain the target EGR rate, the EGR valve control controls the degree of opening of the EGR valve (the degree of opening of the high pressure EGR valve 62 when the HPL-EGR mechanism 6 refluxes the EGR gas, the degree of opening of the low pressure EGR valve 72 when the LPL-EGR mechanism 7 refluxes the EGR gas). This target EGR rate is obtained by an EGR map, which will be described below, according to the engine rotation speed, the engine load, or a similar condition.

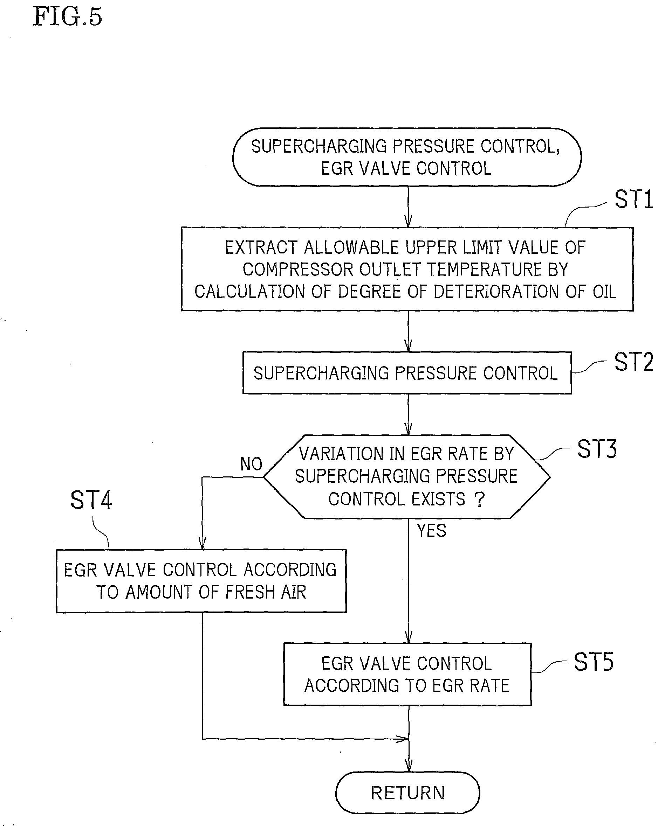

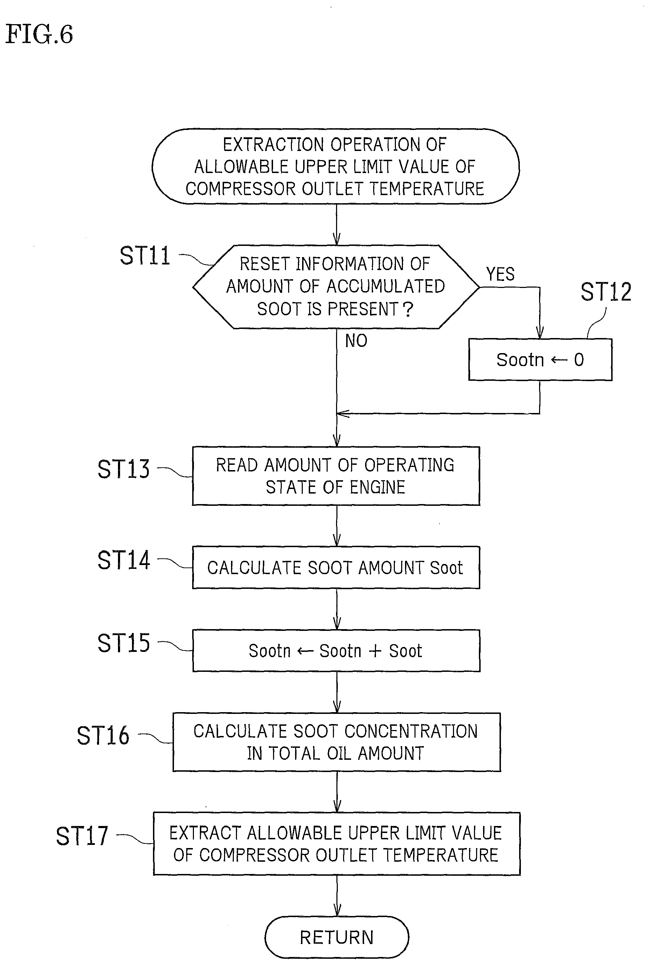

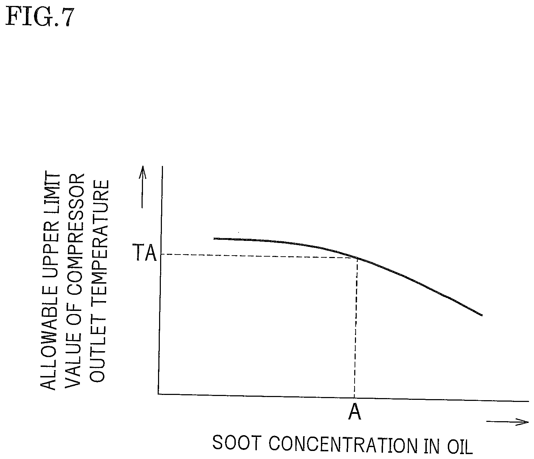

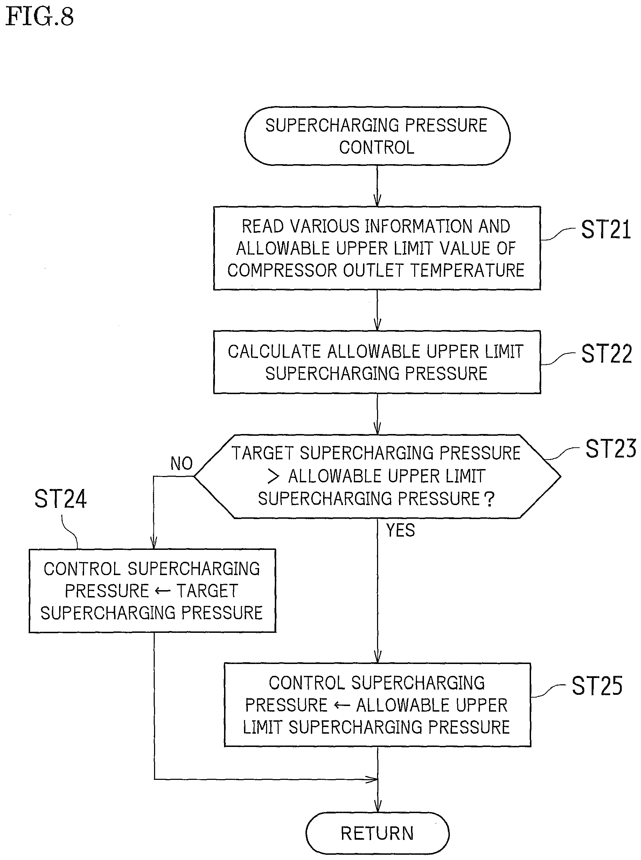

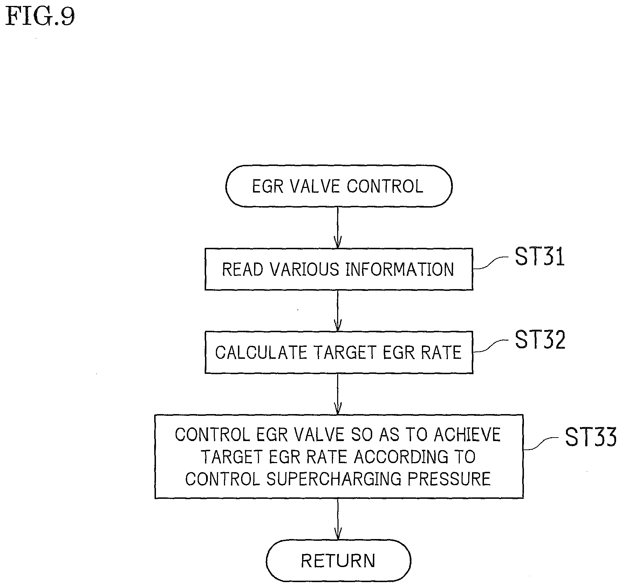

The following describes specific procedures of the supercharging pressure control and the EGR valve control. FIG. 5 is a flowchart illustrating a schematic procedure of the supercharging pressure control and the EGR valve control. FIG. 6 is a flowchart illustrating a procedure of an extraction operation of an allowable upper limit value of compressor outlet temperature. FIG. 7 illustrates an allowable upper limit temperature map for obtaining the allowable upper limit value of compressor outlet temperature from the soot concentration in oil. FIG. 8 is a flowchart illustrating a procedure of the supercharging pressure control by the turbo charger. FIG. 9 is a flowchart illustrating a procedure of the EGR valve control.

### (Outline of Procedures of Supercharging pressure control and EGR Valve Control)

First, the following describes the outlines of procedures of the supercharging pressure control and the EGR valve control following FIG. 5. After an ignition switch (start switch, not illustrated) is turned on and the engine 1 is started, the flowchart illustrated in FIG. 5 is performed at every predetermined time.

First, at Step ST1, a degree of deterioration of engine oil is calculated. Then, the allowable upper limit value of compressor outlet temperature depending on the degree of deterioration is extracted. The details will be described later using the flowchart of FIG. 6.

Afterwards, the process proceeds to Step ST2. Based on the extracted allowable upper limit value of compressor outlet temperature and another information (information such as the operating state of the engine 1), the control supercharging pressure is obtained within the allowable range where the deposit can be avoided. To obtain this control supercharging pressure, the supercharging pressure control is performed on the turbocharger 4. The details will be described later using the flowchart of FIG. 8.

At Step ST3, whether the EGR rate is in a variation condition affected by the supercharging pressure control on the turbocharger 4 or not is determined. When the EGR rate is not in a variation condition, that is, the target supercharging pressure is in a condition that can be controlled within the allowable range, this condition is determined as NO at Step ST3. At Step ST4, according to the above-described basic operation of MPL-EGR system, controls of, for example, the EGR valves 62 and 72 corresponding to the amount of fresh air (controls of the intake throttle valve 33 and the exhaust throttle valve 53 as necessary) are performed. On the other hand, the EGR rate is in a variation condition by the supercharging pressure control on the turbocharger 4 at Step ST2, that is, the target supercharging pressure is limited by the allowable range, this condition is determined as YES at Step ST3. At Step ST5, the controls of, for example, the EGR valves 62 and 72 (as necessary, controls of the intake throttle valve 33 and exhaust throttle valve 53) according to the EGR rate (the EGR rate varied by performing the supercharging pressure control) are performed. That is, the position controls of, for example, the EGR valves 62 and 72 are performed so as to achieve the target EGR rate. The details will be described later using the flowchart of FIG. 9.

### (Extraction Operation of Allowable Upper Limit Value of Compressor Outlet Temperature)

Next, the following describes the extraction operation of the allowable upper limit value of compressor outlet temperature following FIG. 6. The flowchart illustrated in FIG. 6 is details of an operating procedure of Step ST1 in the above-described flowchart of FIG. 5.

First, at Step ST11, information to reset an amount of accumulated Soot in the oil accumulated during operation of the engine 1 is present or not is determined. For example, an automobile dealer or a similar dealer exchanges the engine oil, the engine oil present in an oil pan of the engine 1 hardly contains soot. Accordingly, the amount of soot (amount of accumulated soot: Sootn) accumulated at past routines is reset. Whether this information is present or not, that is, if the engine oil has been replaced or not is determined at Step ST11. This reset information is designed to be input to the ECU 10 by an operator who exchanged the oil. Alternatively, the exchange of the engine oil is configured to be automatically recognized so that a reset instruction signal is input to the ECU 10 when the engine oil is exchanged.

If the reset information of the amount of accumulated soot is present (the reset information is input) and the condition is determined as YES at Step ST11, the process proceeds to Step ST12. The amount of accumulated soot Sootn is set (reset) to "0" and the process proceeds to Step ST13.

On the other hand, if the reset information of the amount of accumulated soot is absent and the condition is determined as NO at Step ST11, the process proceeds to Step ST13 with the amount of accumulated soot up to the moment kept stored (kept stored at a backup Random Access Memory (RAM) of the ECU 10).

At Step ST13, the amount of operating state of the engine 1 is read. For example, the engine load obtained from the engine rotation speed calculated based on an output from the crank position sensor 86, an operation amount of an accelerator pedal detected by the accelerator position sensor 87, or a similar condition is read. The amount of operating state such as a temperature detection signal output from the various temperature sensors 82, 84a to 84d, 85, and 8A is also read.

At Step ST14, based on the amount of operating state of the engine 1 read at Step ST13, the soot amount Soot generated in the engine oil in this routine is calculated. The soot amount Soot is calculated in accordance with the arithmetic expression or the map that calculates the soot amount Soot using the above-described amount of operating state of the engine 1 as a parameter (the arithmetic expression or the map preset based on experiment, simulation, or a similar method and is stored in the ROM of the ECU 10).

Thus, after the soot amount Soot in this routine is calculated, the process proceeds to Step ST15. The calculated soot amount Soot at this routine is added to the currently stored amount of accumulated soot Sootn. The found value is stored as a new amount of accumulated soot Sootn (Sootn ← Sootn + Soot). Thus, the current soot amount in the whole oil is calculated.

Next, at Step ST16, the soot concentration in the total oil amount is calculated. That is, the amount of accumulated soot Sootn calculated at Step ST15 is divided by the preliminary stored total oil amount (for example, the total oil amount injected during the previous oil exchange), thus calculating the soot concentration.

After the soot concentration is thus calculated, the process proceeds to Step ST17. The allowable upper limit value of the compressor outlet temperature is extracted from the allowable upper limit temperature map illustrated in FIG. 7. This allowable upper limit temperature map is a map for deciding the allowable upper limit value of the compressor outlet temperature so as not to generate oil deposit in the compressor 41. The allowable upper limit temperature map is preliminary obtained based on experiment, simulation, or a similar method depending on the type of the engine 1 and is stored in the ROM of the ECU 10. As illustrated in the allowable upper limit temperature map, the higher the soot concentration in the oil, the lower the allowable upper limit value of compressor outlet temperature. This is because of the following. The more the deterioration of oil proceeds as an increase of the soot concentration (the higher a degree of deterioration) in the oil proceeds, the lower the temperature at which the deposit occurs (the compressor outlet temperature at which the deposit occurs). This allowable upper limit temperature map extracts the upper limit value of the compressor outlet temperature (the allowable upper limit value of compressor outlet temperature) at which the deposit does not occur in the current soot concentration. For example, in the case where the soot concentration in the oil is A in the drawing, TA is obtained as the allowable upper limit value of compressor outlet temperature. In this case, as long as the compressor outlet temperature is equal to or less than the TA, the deposit does not occur in the compressor 41.

As the engine oil actually introduced by the automobile dealer or a similar dealer, various engine oil is assumed. In view of this, the allowable upper limit temperature map is created assuming engine oil that is likely to generate the deposit most (for example, a specific mineral oil) among the engine oil possibly to be introduced. This, as long as the temperature is reduced to equal to or less than the allowable upper limit value of compressor outlet temperature obtained from the allowable upper limit temperature map, the generation of deposit can be reliably avoided. The allowable upper limit temperature map may be stored in a rewritable manner in the backup RAM of the ECU 10 so that the operator who exchanged the oil can rewrite the allowable upper limit temperature map corresponding to the type of the introduced engine oil.

### (Supercharging Pressure Control by Turbocharger)

Next, the following describes the supercharging pressure control by the turbocharger 4 following FIG. 8. The flowchart illustrated in FIG. 8 is details of an operating procedure of Step ST2 in the above-described flowchart of FIG. 5.

First, at Step ST21, various information such as the operating state and an environment state of the engine 1 and the allowable upper limit value of compressor outlet temperature extracted by the operation of FIG. 6 is read. For example, the various information such as the operating state and the environment state of the engine 1 includes: the intake temperature at the upstream of the compressor 41 estimated from the intake temperature detected by the intake air temperature sensor 82, the intake temperature at the compressor outlet detected by the compressor outlet temperature sensor 8A, the amount of intake air detected by the air flow meter 81, and the EGR gas reflux amount estimated by the above-described estimation operation of the EGR gas reflux amount. The addition of the amount of intake air detected by the air flow meter 81 and the estimated low pressure EGR gas reflux amount among the EGR gas reflux amount estimated by the estimation operation of the EGR gas reflux amount is found as a gas amount that passes through the compressor 41. The intake temperature at the upstream of the compressor 41 may be directly detected by installing the intake air temperature sensor at the upstream of the compressor 41.

At Step ST22, the allowable upper limit supercharging pressure is calculated. This allowable upper limit supercharging pressure is the supercharging pressure at which the intake temperature of compressor outlet matches the allowable upper limit value of compressor outlet temperature. This value is obtained for the current degree of deterioration of oil where the deposit can be reduced even if the supercharging pressure of the turbocharger 4 is increased up to the allowable upper limit supercharging pressure. In view of this, the more the deterioration of oil proceeds as an increase of the soot concentration (the higher a level of deterioration) in the oil proceeds, the lower the allowable upper limit supercharging pressure value. Specifically, the arithmetic expression or the map obtaining the allowable upper limit supercharging pressure from the allowable upper limit value of compressor outlet temperature is stored in the ROM of the ECU 10. The allowable upper limit supercharging pressure is obtained from the arithmetic expression or the map.

Thus, after the allowable upper limit supercharging pressure is calculated, the process proceeds to Step ST23. Whether the target supercharging pressure exceeds the allowable upper limit supercharging pressure or not (target supercharging pressure > allowable upper limit supercharging pressure) is determined. The target supercharging pressure is found using, for example, the arithmetic expression or the map that calculates the target supercharging pressure using the engine rotation speed calculated based on an output from the crank position sensor 86, the engine load obtained from the operation amount of accelerator pedal detected by the accelerator position sensor 87 or a similar amount, or a similar condition as a parameter (the arithmetic expression or the map (target supercharging pressure map) preset based on experiment, simulation, or a similar method and is stored in the ECU 10).

In the case where the target supercharging pressure is equal to or less than the allowable upper limit supercharging pressure, the control supercharging pressure (supercharging pressure to be the actual control target) needs not to be limited by the allowable upper limit supercharging pressure. This condition is determined as NO at Step ST23. At Step ST24, the target supercharging pressure is set as the control supercharging pressure. The feedback control is performed on the variable nozzle vane mechanism 43 so that the supercharging pressure of the intake air detected by the supercharging pressure sensor 83 becomes the control supercharging pressure (= target supercharging pressure).

On the other hand, if the target supercharging pressure exceeds the allowable upper limit supercharging pressure, in the case where the supercharge pressure is controlled at the target supercharging pressure, the generation of deposit is apprehended. This condition is determined as YES at Step ST23. At Step ST25, the allowable upper limit supercharging pressure is set as the control supercharging pressure. The feedback control is performed on the variable nozzle vane mechanism 43 so that the supercharging pressure of intake air detected by the supercharging pressure sensor 83 becomes the control supercharging pressure (= allowable upper limit supercharging pressure). Thus, reducing the intake temperature at the compressor outlet to be equal to or less than the allowable upper limit value of compressor outlet temperature prevents generation of deposit.

### (EGR Valve Control)

Next, the following describes the EGR valve control following FIG. 9. The flowchart illustrated in FIG. 9 is details of an operating procedure of Step ST5 in the above-described flowchart of FIG. 5.

First, at Step ST31, various information such as the operating state and the environmental state of the engine 1 is read. For example, the amount of operating state and the amount of environmental state, such as the engine rotation speed calculated based on the output from the crank position sensor 86, the amount of fuel injection from the injector 2, a cooling water temperature detected by the water temperature sensor 85, an intake air temperature detected by the intake air temperature sensor 82, and atmospheric air pressure detected by an atmospheric pressure (not illustrated) are read.

At Step ST32, the target EGR rate is calculated. This target EGR rate is decided according to the operating state of the engine 1 or a similar state. Specifically, the EGR map that decides the EGR amount (EGR rate) using the engine rotation speed and the engine load as parameters are stored in the ROM of the ECU 10. The engine rotation speed calculated based on the detected value from the crank position sensor 86, the engine load obtained from the operation amount of accelerator pedal detected by the accelerator position sensor 87, or a similar condition are applied to the EGR map, thus allowing obtaining the target EGR rate.

Then, at Step ST33, in the case where the supercharging pressure is controlled in accordance with the control supercharging pressure, the degree of opening of the EGR valve is controlled so that the actual EGR rate matches the target EGR rate. Specifically, for example, during the high load operation, if the control supercharging pressure is limited by the allowable upper limit supercharging pressure (the condition is determined as YES at Step ST23), the EGR rate may be reduced in accordance with the deterioration of supercharging pressure. In this case, the actual EGR rate is lower than the target EGR rate; therefore, the estimated low pressure EGR gas reflux amount is less than the target low pressure EGR gas reflux amount. Similar to the case of the above-described operation (basic operation during the high load operation of the MPL-EGR system), the degree of opening of the low pressure EGR valve 72 is increased so as to increase the amount of EGR gas. Additionally, assume the case where the estimated low pressure EGR gas reflux amount does not reach the target low pressure EGR gas reflux amount even if the degree of opening of the low pressure EGR valve 72 is thus increased. Then, the degree of opening of the high pressure EGR valve 62 is increased. Alternatively, the degree of opening of the exhaust throttle valve 53 is reduced (the degree of closing is increased), thus increasing the amount of EGR gas refluxed through the low pressure EGR passage 71. Thus, the actual EGR rate can be approximated to the target EGR rate, achieving reduction of the amount of NOx emission.

Similarly, during the middle load operation, if the control supercharging pressure is limited by the allowable upper limit supercharging pressure, the EGR rate may be reduced in accordance with the deterioration of supercharging pressure. In this case, the actual EGR rate is lower than the target EGR rate; therefore, similar to the case of the above-described operation (basic operation during the middle load operation of the MPL-EGR system), the degree of opening of the low pressure EGR valve 72 and the degree of opening of the high pressure EGR valve 62 are controlled so as to increase the amount of EGR gas according to the EGR distribution ratio. Additionally, assume the case where the actual EGR rate does not reach the target EGR rate even if the degrees of opening of the respective EGR valves 62 and 72 are controlled. Then, the degrees of opening of the intake throttle valve 33 and the exhaust throttle valve 53 are controlled so as to increase the amount of EGR gas. Thus, the actual EGR rate is approximated to the target EGR rate, achieving reduction of the amount of NOx emission.

As described above, in the case where the control supercharging pressure is limited by the allowable upper limit supercharging pressure, the amount of intake of new air is reduced, and enters a condition where generation of smoke caused by insufficient oxygen in the combustion chamber is apprehended. However, the particulate filter 52 can recover the smoke. Accordingly, this does not lead to deterioration of exhaust emission.

Repeating the above-described operations allows maximally enhancing the supercharging pressure of the intake air to the turbocharger 4 while reducing the deposit. Preventing the deterioration of supercharging efficiency of the turbocharger 4 allows preventing the deterioration of the engine output, allowing highly maintaining the acceleration performance of the vehicle. The increase of amount of NOx in the exhaust gas or a similar situation in accordance with the deterioration of the supercharging efficiency of the turbocharger 4 is avoided. Even if the supercharging pressure is limited so as to reduce the deposit, the EGR valve control is performed so as to maintain the target EGR rate. Accordingly, the amount of NOx emission due to reduction of the EGR rate is not increased, also allowing preventing degrading the exhaust emission.

In the case of this embodiment, supposing that mineral oil is used as engine oil, the generation of deposit in the compressor 41 is reliably reduced. Even if the synthetic oil, which is less likely to generate the deposit, is used, the use of the allowable upper limit temperature map according to the synthetic oil allows maximally enhancing the supercharging pressure while reducing the deposit.

### -Other Embodiments-

In the above-described embodiment, a description has been given of a case in which the present invention is applied to an in-line four-cylinder diesel engine mounted in an automobile. The present invention is not limited to use in an automobile, and is applicable also to engines used in other applications. Also, there is no particular limitation on the number of cylinders or the engine type (classified as an in-line engine, V engine, horizontally opposed engine, and so forth).

In the above embodiment, a description has been given of a case in which the present invention is applied to the engine 1 with the two EGR mechanisms 6 and 7. However, the present invention is not limited to this. The present invention is also applicable to an engine with one EGR mechanism (LPL-EGR mechanism) or an engine with equal to or more than three EGR mechanisms.

In the above embodiment, the compressor outlet temperature sensor 8A detects the intake temperature flown out from the compressor 41. The present invention is not limited to this. The intake temperature flown out from the compressor 41 may be estimated from the intake temperature flown into the compressor 41. Instead of the detection and estimation of the compressor outlet temperature, the temperature of the compressor 41 itself (components of the compressor 41: for example, a blade of the compressor wheel) may be detected or estimated.

In the above embodiment, the degree of deterioration of engine oil is determined from the soot concentration. The present invention is not limited to this. The degree of deterioration of engine oil (degree of deterioration due to oxidation of oil) may be determined from an elapsed period after oil exchange. Alternatively, other methods may be employed as a method to determine the degree of deterioration of engine oil. For example, a determination of deterioration based on an electrical resistance value of oil as disclosed in Japanese Unexamined Patent Application Publication No. 2011-196220, a determination of deterioration based on permeability of oil as disclosed in Japanese Unexamined Patent Application Publication No. 2011-7084, or a similar determination is applicable.

Further, in the above embodiment, the cause of deposit is engine oil contained in the EGR gas; however, the cause may be engine oil contained in blow-by gas.

### INDUSTRIAL APPLICABILITY

The present invention is applicable to a control of a diesel engine with a turbocharger and an LPL-EGR mechanism.

### DESCRIPTION OF REFERENCE SIGNS

- 1: engine (internal combustion engine)
- 3: intake passage (intake system)
- 4: turbocharger (supercharger)
- 41: compressor
- 5: exhaust passage (exhaust system)
- 6: HPL-EGR mechanism (high pressure EGR mechanism)
- 61: high pressure EGR passage
- 62: high pressure EGR valve
- 7: LPL-EGR mechanism (low pressure EGR mechanism)
- 71: low pressure EGR passage
- 72: low pressure EGR valve
- 10: ECU
- 8A: compressor outlet temperature sensor

## Claims

1. A control apparatus for an internal combustion engine (1) comprising a supercharger (4) with a compressor (41) at an intake system (3), wherein
supercharging pressure of the supercharger is controlled within a control range where an intake temperature of an outlet side of the compressor or a temperature of a component constituting the compressor is equal to or less than an allowable upper limit temperature, the allowable upper limit temperature being set according to a degree of deterioration of oil flown into an intake side of the compressor,
a low pressure EGR system (7) with a low pressure EGR valve (72) is provided, the low pressure EGR system causing a part of exhaust gas discharged to an exhaust system (5) to be refluxed to an upstream of the compressor, the low pressure EGR valve being able to adjust an amount of the refluxed gas, and a high pressure EGR system (6) with a high pressure EGR valve (62) is provided, the high pressure EGR system causing a part of exhaust gas discharged to the exhaust system to be refluxed to a downstream of the compressor, the high pressure EGR valve also being able to adjust the amount of refluxed gas,
the control apparatus controls the low pressure EGR valve such that an EGR rate of intake air matches a target EGR rate under a condition that the control of the low pressure EGR valve is sufficient to match the EGR rate of intake air with the target EGR rate, the target EGR rate being set according to an operating state of the internal combustion engine, and
the control apparatus controls the low pressure EGR valve and the high pressure EGR valve to match the EGR rate of intake air with the target EGR rate under a condition that the control of the low pressure EGR valve is not sufficient to match the EGR rate of intake air with the target EGR rate.

2. The control apparatus for internal combustion engine according to claim 1, wherein
the higher a concentration of soot generated in the oil becomes, the higher a degree of deterioration of oil flown into the intake side of the compressor is determined to be, and
the higher the degree of deterioration of oil becomes, the lower the allowable upper limit temperature value of the intake temperature of the outlet side of the compressor or the temperature of the component constituting the compressor is set.

## Patentansprüche

1. Steuerungsvorrichtung für einen Verbrennungsmotor (1), umfassend einen Vorverdichter (4) mit einem Kompressor (41) an einem Ansaugsystem (3) wobei
ein Ladedruck des Vorverdichters innerhalb eines Steuerungsbereichs gesteuert wird, in dem eine Ansaugtemperatur einer Auslassseite des Kompressors oder eine Temperatur eines den Kompressor darstellenden Bauteils kleiner oder gleich einer zulässigen oberen Grenztemperatur ist, wobei die zulässige obere Grenztemperatur gemäß einem Grad der Verschlechterung des in eine Ansaugseite des Kompressors geströmten Öls eingestellt ist,
ein Niederdruck-AGR-System (7) mit einem Niederdruck-AGR-Ventil (72) vorgesehen ist, wobei das Niederdruck-AGR-System bewirkt, dass ein Teil des an ein Abgassystem (5) abgeführten Abgases zu einer stromaufwärts von dem Kompressor gelegenen Stelle zurückgeführt wird, wobei das Niederdruck-AGR-Ventil in der Lage ist, eine Menge des zurückgeführten Gases einzustellen, und wobei ein Hochdruck-AGR-System (6) mit einem Hochdruck-AGR-Ventil (62) vorgesehen ist, wobei das Hochdruck-AGR-System bewirkt, dass ein Teil des zu dem Abgassystem abgeführten Abgases zu einer stromabwärts von dem Kompressor gelegenen Stelle zurückgeführt wird, wobei das Hochdruck-AGR-Ventil ebenfalls in der Lage ist, die Menge des zurückgeführten Gases einzustellen,
die Steuerungsvorrichtung das Niederdruck-AGR-Ventil auf eine solche Weise steuert, dass eine AGR-Luftansaugrate mit einer Soll-AGR-Rate unter der Bedingung übereinstimmt, dass die Steuerung des Niederdruck-AGR-Ventils ausreicht, um die AGR-Luftansaugrate auf die Soll-AGR-Rate abzustimmen, wobei die Soll-AGR-Rate gemäß einem Betriebszustand des Verbrennungsmotors eingestellt ist, und
die Steuerungsvorrichtung das Niederdruck-AGR-Ventil und das Hochdruck-AGR-Ventil steuert, um die AGR-Luftansaugrate auf die Soll-AGR-Rate unter der Bedingung abzustimmen, dass die Steuerung des Niederdruck-AGR-Ventils nicht ausreicht, um die AGR-Luftansaugrate auf die Soll-AGR-Rate abzustimmen.

2. Steuerungsvorrichtung für einen Verbrennungsmotor nach Anspruch 1, wobei
ein Grad der Verschlechterung des in die Ansaugseite des Kompressors geströmten Öls um so höher bestimmt wird, je höher eine Konzentration von in dem Öl erzeugten Ruß wird, und
der zulässige obere Temperaturgrenzwert der Ansaugtemperatur der Auslassseite des Kompressors oder die Temperatur des den Kompressor darstellenden Bauteils um so niedriger eingestellt wird, je höher der Grad der Verschlechterung des Öls wird.

## Revendications

1. Appareil de commande pour un moteur à combustion interne (1) comprenant un compresseur d'alimentation (4) comportant un compresseur (41) au niveau d'un système d'admission (3), dans lequel
une pression de suralimentation du compresseur d'alimentation est régulée au sein d'une plage de régulation où une température d'admission d'un côté sortie du compresseur ou une température d'un composant constituant le compresseur est égale ou inférieure à une température limite supérieure admissible, la température limite supérieure admissible étant définie en fonction d'un degré de détérioration de l'huile envoyée vers un côté admission du compresseur,
un système de RGE basse pression (7) comportant une soupape de RGE basse pression (72) est prévu, le système de RGE basse pression provoquant le reflux vers un côté amont du compresseur d'une partie des gaz d'échappement rejetés vers un système d'échappement (5), la soupape de RGE basse pression étant apte à ajuster une quantité des gaz de reflux, et un système de RGE haute pression (6) comportant une soupape de RGE haute pression (62) est prévu, le système de RGE haute pression provoquant le reflux vers un côté aval du compresseur d'une partie des gaz d'échappement rejetés vers le système d'échappement, la soupape de RGE haute pression étant également apte à ajuster la quantité des gaz de reflux,
l'appareil de commande commande la soupape de RGE basse pression de telle sorte qu'un débit de RGE d'air d'admission corresponde à un débit de RGE cible dans un cas dans lequel la commande de la soupape de RGE basse pression est suffisante pour faire correspondre le débit de RGE d'air d'admission avec le débit de RGE cible, le débit de RGE cible étant défini en fonction d'un état de fonctionnement du moteur à combustion interne, et l'appareil de commande commande la soupape de RGE basse pression et la soupape de RGE haute pression afin de faire correspondre le débit de RGE d'air d'admission avec le débit de RGE cible dans un cas dans lequel la commande de la soupape de RGE basse pression n'est pas suffisante pour faire correspondre le débit de RGE d'air d'admission avec le débit de RGE cible.

2. Appareil de commande pour un moteur à combustion interne selon la revendication 1, dans lequel plus une concentration de suie générée dans l'huile augmente, plus un degré de détérioration déterminé de l'huile envoyée au côté admission du compresseur est élevé, et
plus le degré de détérioration de l'huile augmente, plus la valeur de température limite supérieure admissible de la température d'admission du côté sortie du compresseur ou la température définie du composant constituant le compresseur est faible.
